# EUROPEAN PATENT APPLICATION

(11) **EP 1 453 330 A1**
(43) Date of publication of application: **01.09.2004**
(21) Application number: 02802722.5
(22) Date of filing: 07.11.2002
(51) Int. Cl.: H04Q 7/28

(54) **MOBILE BODY COMMUNICATION SYSTEM; RADIO COMMUNICATION CONTROL APPARATUS; MOBILE BODY COMMUNICATION APPARATUS; AND MOBILE BODY COMMUNICATION METHOD**

(30) Priority: 07.11.2001 JP 2001342219
(71) Applicant: NTT DoCoMo, Inc., Tokyo 100-6150 (JP)
(72) Inventor: MORIHIRO, Yoshifumi c/o NTT DoCoMo, Inc., Tokyo 100-6150 (JP); HAYASHI, Takahiro c/o NTT DoCoMo, Inc., Tokyo 100-6150 (JP); IWAMURA, Mikio /o NTT DoCoMo, Inc., Tokyo 100-6150 (JP); ISHIKAWA, Yoshihiro c/o NTT DoCoMo, Inc., Tokyo 100-6150 (JP)
(74) Representative: Sparing - Röhl - Henseler Patentanwälte
(86) International application number: PCT/JP2002/011617
(87) International publication number: WO 2003/041432

(57) **Abstract**

A mobile communication system 1 to which the present invention is applied changes appropriately the information rate at which communication between a mobile station and a base station is performed, according to the number of DHO branches of the mobile station. Thus, overload on power resources at the base station can be prevented and decreases in capacity of the base station and decreases in communication efficiency of the entire mobile communication system 1 can be prevented. The number of DHO branches is managed by radio communication control apparatuses 20, 30 and therefore the effects of the present invention can be obtained with little modification to the hardware resources of an existing mobile communication system.

## Description

### Technical Field

The present invention relates to a mobile communication system including a plurality of base stations and mobile communication apparatuses, and a radio communication control apparatus, a mobile communication apparatus, and a mobile communication method.

### Background Art

The widespread use of cellular phones and the like has drastically increased the use of mobile communication systems in recent years.

In a mobile communication system currently available, a number of base stations having a predetermined coverage area (hereinafter referred to as a "cell") are installed in many locations. Amobile station (mobile communication apparatus) can use the system when it is positioned at least one of the base station cells. That is, the cells of the base stations collectively make up the service area of the system.

The information rate between a base station and a mobile station in such a mobile communication system depends on the communication quality and tightly relates to the signal-to-interference power ratio (SIR).

The following relationship exists between the communication quality and SIR: in order to provide communication at a high information rate, a low error rate, besides a highly efficient modulation method, is essential and therefore a high SIR at a receiving end is required. This means that in order to carry out communications at a higher information rate, a higher transmission electric power is required at sending ends.

For example, in order to transmit data from a base station to a mobile station at a high information rate, a high SIR at the mobile station (high transmission power at the base station) is required. On the other hand, in order to transmit data from the base station to the mobile station at a low information rate, a high SIR at the mobile station is not necessary (high transmission power at the base station is not necessary). The same applies to cases where data is transmitted from the mobile station to the base station.

Thus, a mobile communication system must ensure a required communication quality and, for that purpose, uses transmission power control.

In mobile communication, a radio wave transmitted from a base station attenuates as it propagates through the air before reaching a mobile station. The attenuation is affected by the distance between the base station and the mobile station and geographic features of structures. Therefore, power received at the base station drastically varies (fades) as a mobile station being transmitting data moves if the transmission power is constant.

Therefore, in order to maintain a constant communication quality even if fading occurs, feedback transmission power control based on the communication quality is performed in addition to the transmission power control described above.

Feedback transmission power control involves: at the receiving end, measuring the reception quality, comparing it with a desired value, associating the result of the comparison with a radio frame or timeslot, and feeding it back to the sending end; and at the sending end, controlling the transmission power according to the fed result of the comparison.

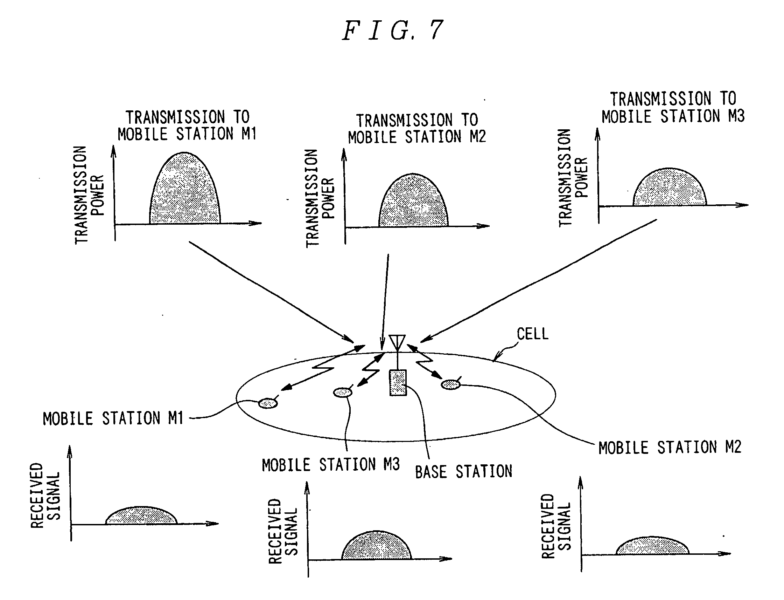

Figure 7 shows signal levels obtained when transmission control is performed. If mobile stations M1 and M2 in Figure 7 communicate with the base station at the same information rate, transmission power is controlled in order to make the communication qualities equal to each other. As a result, communication between the base station and mobile station M1, which is farther away from the base station than mobile station M2 is, is carried out at a transmission power level higher than that of communication between the base station and mobile station M2. This transmission power control provides mobile stations M1 and M2 with the same reception quality.

Mobile stations M2 andM3 in Figure 7 are at substantially equal distances to the base station but communication between mobile station M3 and the base station is carried out at an information rate higher than that of communication between mobile station M2 and base station. In this case, communication between the base station and mobile station M3 is performed at a transmission power level higher than that of communication between the base station and mobile station M2.

In this way, transmission power control can maintain reception quality at the same level and, in addition, can reduce variations in communication quality depending on the location of a mobile station in the service area. This technology can also lower transmission power, thereby improving the efficiency of power usage.

The reception quality that provides the measure for controlling transmission power may be, besides SIR, reception power (received signal level), the result of error detection by using signal quality (CRC: Cyclic Redundancy Check), or an error rate such as BLER (Block Error Rate) and BER (Bit Error Rate).

As described above, a mobile station in the mobile communication system can carry out communication when it is within the cell of a base station. As the mobile station moves across more than one cell, communication is switched from one base station to another. This is commonly known as a handover. Handover schemes can be classified broadly into two types. Aprior-art handover technology is described in Japanese Patent Laid-Open No. 2002-232353.

A first scheme is called a hard handover (HHO). In this scheme, when a mobile station moves from one cell to another, the mobile station instantly switches to a base station to which it establishes a radio channel. The mobile station can carry out communication with only one base station at a time.

A second scheme is called a diversity handover (DHO). In this scheme, before a mobile station releases the radio channel to a base station to which it is connected, the mobile station establishes a radio channel to a new base station. Then, the mobile station releases the radio channel to the base station to which it has been connected. In the DOH scheme, a mobile station can communicates with more than one base stations at a time. Each of radio channels the mobile station has established is called a DHO branch (or diversity branch) . The DHO scheme has an advantage over the HHO scheme in that a short transmission interrupt does not occur when connection is switched from one base station to another.

When a mobile station is at the edge of the cell of a base station and is communicating with only that base station (in HHO scheme), a large transmission power is required for keeping the reception quality at a constant level. Therefore, in some cases, power supply sufficient for compensating for decreases in the signal level due to fading cannot be secured.

On the other hand, according to the DHO scheme, when a mobile station is at the edge of the cell of a base station, signals from the base station to which the mobile station previously connected and signals from the base station to which the mobile station has newly connected are combined, allowing the reception quality at the mobile station to be kept at a constant level.

The degree of fading depends on base stations. According to the DHO scheme, a decrease in the signal level of a base station due to fading can be compensated by another base station. Thus, the stability of communication quality can be maintained and transmission power can be reduced.

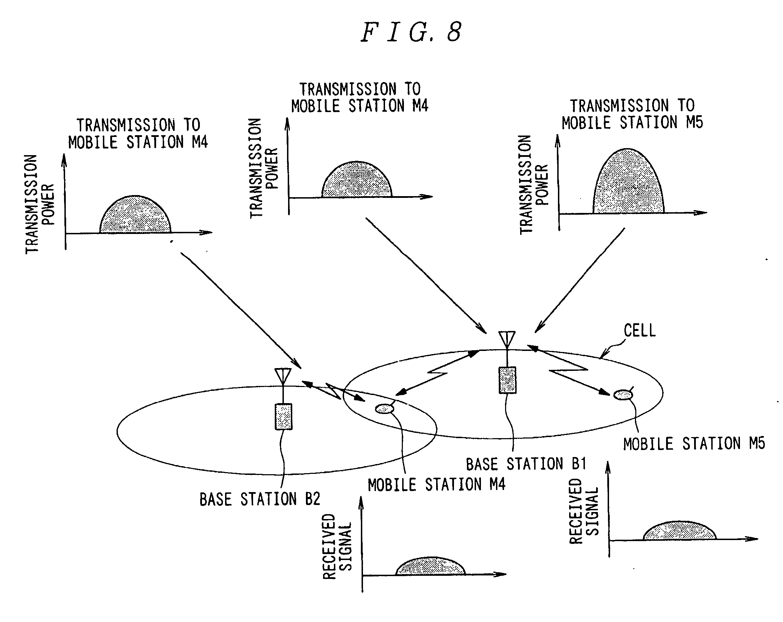

Figure 8 shows a communication power levels when a DHO scheme is used. In figure 8, mobile station M4 is at the edge of the cell of base station B1 and also included in the cell of base station B2. Mobile station M5 is included only in the cell of base station B1 and, like mobile station M4, is positioned at the edge of the cell of base station B1.

When mobile stations M4 andM5 communicate with each other at the same information rate, a DHO causes transmission power to mobile station M4 to be provided from base stations B1 and B2. Thus, predetermined total transmission power is provided. That is, the transmission power of each of base station B1 and B2 is the divisions of the predetermined transmission power and transmission power from B1 to mobile station M4 is smaller than transmission power from base station B1 to M5.

As described above, transmission power control and DHO allow a mobile station to obtain a predetermined, required communication quality at anywhere in the coverage area of the mobile communication system.

However, a mobile station uses more power for communication when it is at the edge of the cell of a base station than when it is near the base station. When the DHO scheme is used, transmission power that each of a number of base stations should provide is relatively small. However, the system as a whole requires large transmission power. In addition, when communication is taking place at a high information rate, higher transmission power is required.

Power that base station can transmit is limited. Therefore, a mobile station that is at the edge of its cell and consumes large transmission power may place overload on power resources and reduce the capacity of the base station. This causes a reduction in communication efficiency of the entire system.

An object of the present invention is to prevent a reduction in communication efficiency of an entire DHO-based mobile communication system.

### Disclosure of the Invention

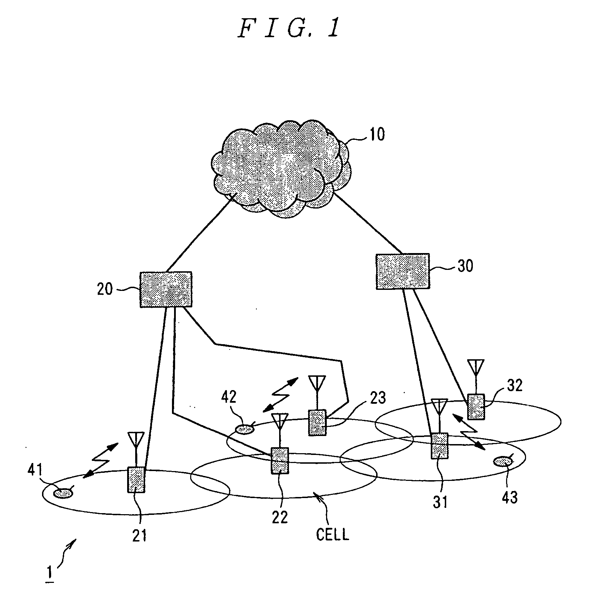

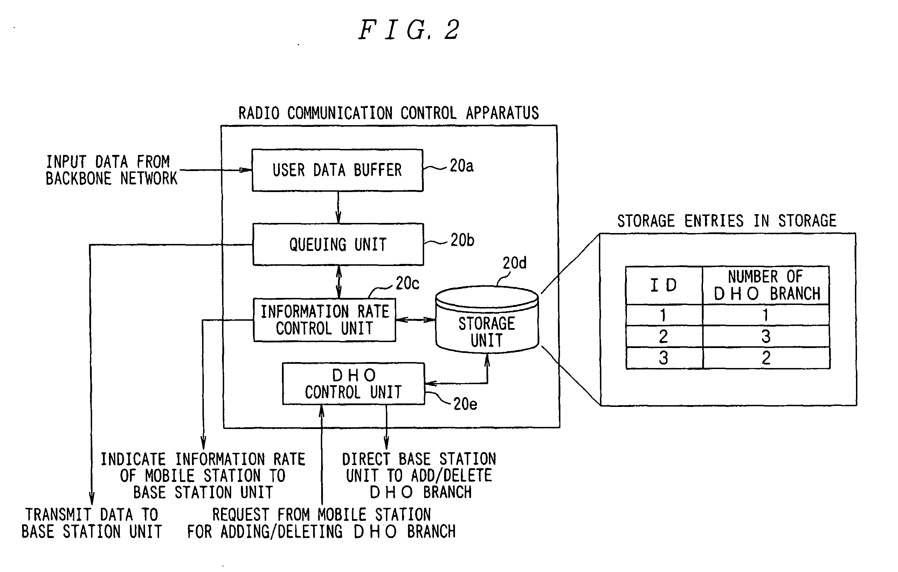

According to the present invention, there is provided a mobile communication system comprising a plurality of base station units ( for example base stations 21-23, 31, 32 in Figure 1) having a predetermined radio communication coverage area (for example, the cells of the base stations 21-23, 31, 32 in Figure 1), a mobile communication apparatus (for example mobile stations 41- 43 in Figure 1) capable of communicating with the base station units, and a radio communication control apparatus that provides centralized control over the plurality of base station units, the mobile communication apparatus connecting to base station units corresponding to a plurality of radio communication coverage areas when the mobile communication apparatus is within an area in which the plurality of radio communication coverage areas overlap with each other, the mobile communication system comprising: connection count managing means (for example a DHO control unit 20e and a storage 20d in Figure 2) for managing the number of connections (for example "the number of DHO branches" in an embodiment of the present invention) that represents the number of base station units to which the mobile communication apparatus is connected; and information rate changing means (for example an information rate control unit 20c in Figure 2) for changing, based on the number of connections managed by the connection count managing means, an information rate at which communication between the mobile communication apparatus and the base station unit corresponding to a radio communication coverage area in which the mobile communication apparatus is positioned is performed.

The mobile communication system is also characterized in that the connection count managing means manages at any time the number of connections which changes as the mobile station moves; and the information rate changing means changes the information rate at any time based on the number of connections managed by the connection count managing means.

The mobile communication system is also characterized in that the information rate changing means changes the information rate to a base rate divided by the number of connections, the base rate being an information rate at which the mobile communication apparatus is being connected to one of the base station units.

The mobile communication system is also characterized in that the information rate changing means comprises storage means (for example the storage 20d in Figure 2) for storing a predetermined information rate corresponding to the number of connections and changes the information rate to the predetermined information rate stored in the storage means in accordance with the number of connections.

According to the present invention, there is provided a radio communication control apparatus for a mobile communication system comprising a plurality of base station units having a predetermined radio communication coverage area, amobile communication apparatus capable of communicating with the base station units, and a radio communication control apparatus that provides centralized control over the plurality of base station units, the mobile communication apparatus connecting to base station units corresponding to a plurality of radio communication coverage areas when the mobile communication apparatus is within an area in which the plurality of radio communication coverage areas overlap with each other, the radio communication control apparatus being characterized by comprising: connection count managing means for managing the number of connections that represents the number of base station units to which the mobile communication apparatus is connected; and information rate changing means for changing, based on the number of connections managed by the connection count managing means, an information rate at which communication between the mobile communication apparatus and the base station unit corresponding to a radio communication coverage area in which the mobile communication apparatus is positioned is performed.

The radio communication control apparatus is also characterized in that the connection count managing means manages at any time the number of connections which changes as the mobile station moves; and the information rate changing means changes the information rate at any time based on the number of connections managed by the connection count managing means.

The radio communication control apparatus is also characterized in that the information rate changing means changes the information rate to a base rate divided by the number of connections, the base rate being an information rate at which the mobile communication apparatus is being connected to one of the base station units.

The radio communication control apparatus is also characterized in that the information rate changing means comprises storage means for storing a predetermined information rate corresponding to the number of connections and changes the information rate to the predetermined information rate store in the storage means in accordance with the number of connections.

According to the present invention, there is provided a mobile communication apparatus for a for a mobile communication system comprising a plurality of base station units having a predetermined radio communication coverage area, amobile communication apparatus capable of communicatingwith the base station units, and a radio communication control apparatus that provides centralized control over the plurality of base station units, the mobile communication apparatus connecting to base station units corresponding to a plurality of radio communication coverage areas when the mobile communication apparatus is within an area in which the plurality of radio communication coverage areas overlap with each other, characterized in that an information rate at which the mobile communication apparatus communicates with a base station to which the mobile communication apparatus is connected can be changed according to an instruction from the radio communication control apparatus.

According to the present invention, there is provided amobile communicationmethod for a mobile communication system comprising a plurality of base station units having a predetermined radio communication coverage area, a mobile communication apparatus capable of communicatingwith the base station units, and a radio communication control apparatus that provides centralized control over the plurality of base station units, the mobile communication apparatus connecting to base station units corresponding to a plurality of radio communication coverage areas when the mobile communication apparatus is within an area in which the plurality of radio communication coverage areas overlap with each other, the mobile communication method being characterized by comprising: a connection count managing step of managing the number of connections that represents the number of base station units to which the mobile communication apparatus is connected; and a information rate changing step of changing, based on the number of connections managed, an information rate at which communication between the mobile communication apparatus and the base station unit corresponding to a radio communication coverage area in which the mobile communication apparatus is positioned is performed.

The mobile communication method is also characterized in that, at the connection count managing step, the number of connections which changes as the mobile station moves is managed at any time; and at the information rate changing step, the information rate is changed at any time based on the number of connections managed by the connection count managing means.

The mobile communication method is also characterized in that, at the information rate changing step, the information rate is changed to a base rate divided by the number of connections, the base rate being an information rate at which the mobile communication apparatus is being connected to one of the base station units.

The mobile communication method is also characterized in that, at the information rate changing step, the information rate is changed to a stored predetermined information rate corresponding to the number of connections.

### Brief Description of the Drawings

Figure 1 is a diagram showing a system configuration of a mobile communication system 1 according to the present invention;
Figure 2 is a block diagram showing a functional configuration of a radio communication control apparatus 20;
Figure 3 is a block diagram showing a functional configuration of a mobile station 41;
Figure 4 is a diagram showing an information rate control process performed by the mobile communication system 1;
Figure 5 is a diagram showing a state in which the mobile station 41 has started communication (at position A) in the cell of a base station 21 and is moving to the cells of base stations 22 and 23 (position B to position C);
Figure 6 is a flowchart of an information rate update process performed by an information rate controlling unit 20c;
Figure 7 is a diagram showing signal levels when transmission power is controlled; and
Figure 8 is a diagram showing communication power levels when a DHO scheme is used.

### Best Mode for Carrying Out the Invention

An embodiment of a mobile communication system according to the present invention will be detailed below with reference to the accompanying drawings.

Figures 1 to 6 shows a mobile communication system 1 to which the present invention is applied. The mobile communication system 1 uses a diversity handover (DHO) scheme.

A configuration of the system will be described first.

Figure 1 shows a system configuration of the mobile communication system 1 according to the present invention. The mobile communication system in Figure 1 comprises a backbone network 10, a radio communication control apparatuses 20, 30, base stations 21 to 23 and 31 and 32, and mobile stations 41 to 43.

The backbone network 10 is a typical cellular phone network, which includes switches and the like. The radio communication control apparatuses 20 and 30 communicate with each other over the backbone network 10.

The radio communication control apparatuses 20 and 30 direct the base stations 21 to 23, and 31 and 32 to control information rates and to add or delete DHO branches. They also provide centralized control over the base stations 21-23, 31, 32.

Figure 2 is a block diagram showing a functional configuration of the radio communication control apparatus 20. The radio communication control apparatus 30 has the same configuration and therefore only the radio communication control apparatus 20 will be described.

The radio communication control apparatus 20 in Figure 2 comprises a user data buffer 20a, a queuing unit 20b, an information rate control unit 20c, a storage unit 20d, and a DHO control unit 20e.

The user data buffer 20a temporarily stores data transmitted by the backbone network 10 and outputs data to the queuing unit 20b at a certain time.

The queuing unit 20b controls the order in which data inputted from the user data buffer 20a is outputted and sends each piece of data to an appropriate base station unit in that output order.

The information rate control unit 20c specifies an information rate at which data sent from the queuing unit 20b is transmitted from a base station unit to a mobile station unit according to the number of the DHO branches of the mobile station that is stored in the storage unit 20d.

The storage unit 20d stores the number of the DHO branches of each mobile station. Its content is updated as instructed by the DHO control unit 20e. The number of DHO branches represents the number of base stations to which amobile station is connected at a time with a diversity handover.

The DHO control unit 20e, in response to a request provided from a mobile station to add or delete a DHO branch, directs a relevant base station to connect to or disconnect from the mobile station, thereby adding or deleting the DHO branch.

The base stations 21 - 23, 31, 32 can communicate with mobile stations within their cells. The base stations 21-23, 31, 32 are configured such that they can change the information rate of communication withmobile stations in their cells and communicates with each mobile station at an information rate indicated by a radio communication control apparatus 20, 30.

The mobile stations 41 to 43 may be mobile communication apparatus such as cellular phones and can connect to the base stations 21, 23, 31, 32 by using a DHO scheme.

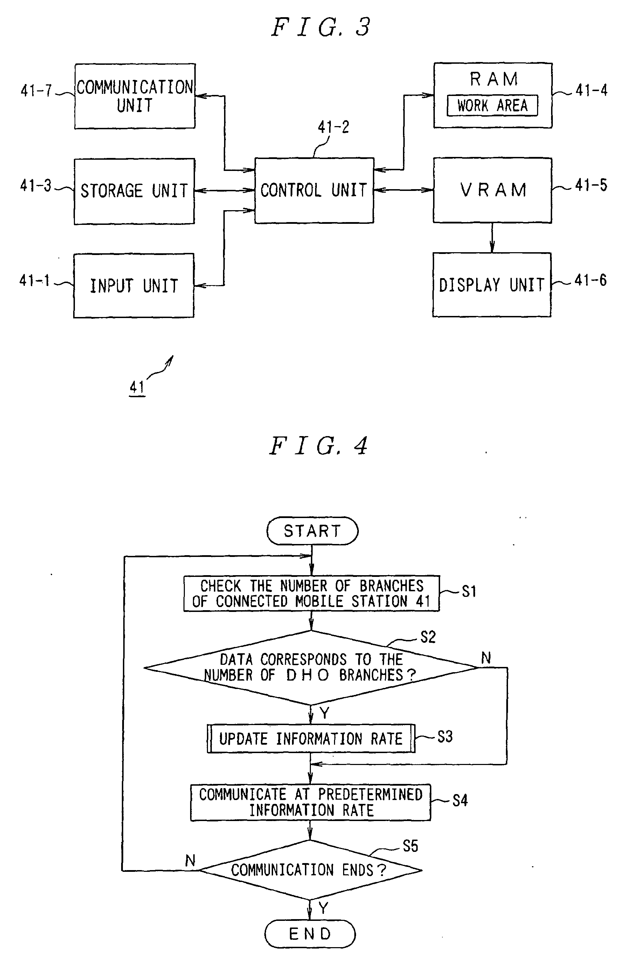

Figure 3 is a block diagram showing a functional configuration of a mobile station 41. The mobile stations 41 - 43 have a similar configuration and therefore the functional configuration of the mobile station 41 will be taken as an example and described below.

As shown in Figure 3, the mobile station 41 comprises an input unit 41-1 for inputting information, a control unit 41-2 for controlling the entire mobile station, a storage 41-3 for storing information, a RAM (Random Access Memory) 41-4 used as a work area for processing, a VRAM (Video Random Access Memory) 41-5 for storing display data, a display unit 41-6 for displaying information stored in the VRAM, and a communication unit 41-7 for communicating with base stations.

The mobile station 41, which has the configuration described above, communicates with a base station through the communication unit 41-7 and the control unit 41-2 changes the information rate of communication with the base station according to an information rate change instruction sent from the base station.

Operation will be described below.

Operation of the entire mobile communication system 1 will be described first.

Figure 4 shows an information rate control process performed by the mobile communication system 1. The information rate control process is started when a mobile station initiates communication through any of the base station in the mobile communication system 1.

An example will be describe below in which the mobile station 41 starts to communicate in the cell (at position A) of a base station 21 and moves to the cells of base stations 21 and 23 (position B to position C).

In Figure 4, when the information rate control process starts, the radio communication control apparatus 20 checks the number of the DHO branches of the mobile station 41 that is connecting to the base station 21 (step S1).

The radio communication control apparatus 20 judges whether the information rate of the mobile station 41 is in accordance with the number of DHO branches (step S2). If it judges that the information rate of the mobile station 41 is not in accordance with the number of DHO branches, the radio communication control apparatus 20 changes the information rate of the mobile station 41 to a rate in accordance with the number of DHO branches (step S3).

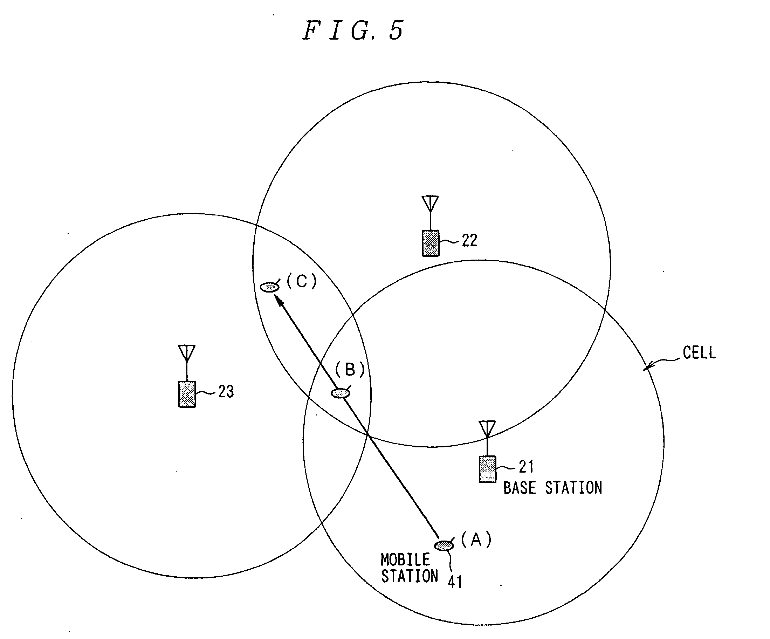

As shown in Figure 5, the information rate of the mobile station 41 would not be in accordance with the number of DHO branches if the mobile station 41 is at the edge of the cell of the base station 21, is within the cell of the base station 22, and is connecting to the base stations 21, 22, 23 through DHO (when moving from position A to position B) , for example.

The base station 41 starts communicating with the mobile station 41 at the given information rate (the information rate changed at step S3) (step 4).

On the other hand, if it is judged at step S2 that the information rate of the mobile station 41 is in accordance with the number of DHO branches, then the process proceeds to step S4 (communication at the current information rate).

Next, the radio communication control apparatus 20 judges whether the mobile station 41 is not connected to any of the base stations (it has end the communication) (step S5). If it is judges that the mobile station 41 is connected to any of the base stations, the process returns to step 1.

On the other hand, if it is judged at step S5 that the mobile station 41 is not connected to any of the base stations, the information rate control process will end.

The process performed at step S3 (hereinafter called the "information rate update process") of the information rate control process shown in Figure 4 will be described below. The information rate update process is performed by the information rate control unit 20c of the radio communication control apparatus 20.

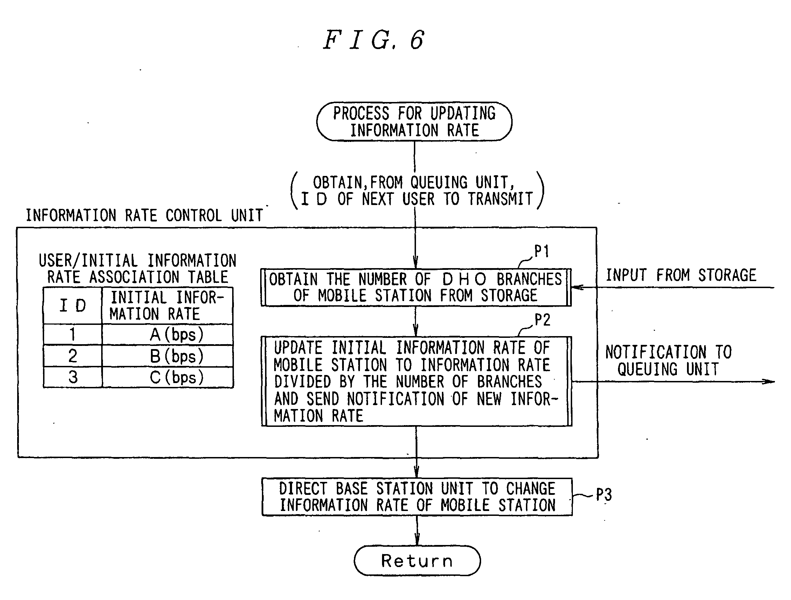

Figure 6 is a flowchart of the information rate update process performed by the information rate control unit 20c.

In Figure 6, when the information rate update process is started, the information rate control unit 20c obtains the number of the DHO branches of the mobile station 41 from the storage 20d based on the identification number of the mobile station 41 inputted as the destination of data from the queuing unit 20b (step P1).

The information rate control unit 20c then updates the information rate to the initial information rate of the mobile station 41 (the information rate when the number of branches is "1") divided by the number of DHO branches and indicates the new, updated information to the queuing unit 20b (step P2).

The information rate control unit 20c manages the initial information rate of each mobile station by associating its initial information rate with its identification number (see Figure 6).

The information rate control unit 20c sends the updated information rate to the base station 21 and provides indication of the information rate update to the mobile station 41 (step P3).

In the foregoing description, the initial information rate divided by the number of DHO branches is set as the new information rate in the information rate update process shown in Figure 6. Alternatively, a table for setting a given information rate associated with the number of DHO branches may be provided and the current information rate may be updated to the given information rate depending on the number of DHO branches of the mobile station 41. In that case, the table is referred to at step P2 in Figure 6 to update the information rate.

As described above, the mobile communication system 1 to which the present invention is applied changes the information rate of communication between a mobile station and a base station as appropriate on the basis of the number of DHO branches of the mobile station.

Thus, overload on the power resources at the base station can be prevented and therefore decreases in capacity of the base station and decreases in communication efficiency of the entire mobile communication system 1 can be prevented.

Moreover, because the number of DHO branches is controlled by the radio communication control apparatuses 20, 30, the effects of the present invention can be obtained with little modification to the hardware resources of an existing mobile communication system.

According to the present invention, an information rate is controlled in accordance with the number of DHO branches, rather than controlling transmission power as in conventional approaches.

Transmission power at mobile and base stations has upper and lower limits and can be changed within the range between them.

Therefore, in a system in which only transmission power is controlled, there may be a case where a mobile station at the edge of the cell of a base station, for example, cannot obtain required communication quality even if transmission is being performed at the upper-limit transmission power (maximum power).

In such a case, required communication quality can be provided by controlling the information rate to a lower value.

On the other hand, there may be a case where a required quality is substantially exceeded when transmission is being performed at the lower-limit transmission power (minimum power). In such a case, power can efficiently be used by increasing the information rate.

Thus, controlling an information rate provides control characteristics and effects that are different from those provided by controlling transmission power and therefore the present invention provides unique effects.

### Industrial Applicability

According to the present invention, the information rate at which communication between a mobile station unit and a base station unit is carried out is changed in accordance with the number of connections of the mobile station.

Consequently, the present invention can prevent overload on power resources in base station units and therefore can prevent decreases in capacity of the base station units and in the communication efficiency of the entire mobile communication system.

Furthermore, the effects of the present invention can be obtained by managing the number of connections by means of radio communication control apparatuses with little modification to the hardware resources of an existing mobile communication system.

## Claims

1. A mobile communication system comprising a plurality of base station units having a predetermined radio communication coverage area, a mobile communication apparatus capable of communicating with said base station units, and a radio communication control apparatus that provides centralized control over said plurality of base station units, said mobile communication apparatus connecting to base station units corresponding to a plurality of radio communication coverage areas when said mobile communication apparatus is within an area in which said plurality of radio communication coverage areasoverlapwitheachother, saidmobilecommunicationsystem being **characterized by** comprising:
connection count managing means for managing the number of connections that represents the number of base station units to which said mobile communication apparatus is connected; and
information rate changing means for changing, based on the number of connections managed by said connection count managing means, an information rate at which communication between said mobile communication apparatus and the base station unit corresponding to a radio communication coverage area in which said mobile communication apparatus is positioned is performed.

2. The mobile communication system according to claim 1, **characterized in that** said connection count managing means manages at any time the number of connections which changes as said mobile station moves; and
said information rate changing means changes said information rate at any time based on the number of connections managed by said connection count managing means.

3. The mobile communication system according to claim 1 or 2, **characterized in that** said information rate changing means changes said information rate to a base rate divided by said number of connections, said base rate being an information rate at which said mobile communication apparatus is being connected to one of the base station units.

4. The mobile communication system according to any of claims 1 to 3, **characterized in that** said information rate changing means comprises storage means for storing a predetermined information rate corresponding to said number of connections and changes said information rate to the predetermined information rate stored in said storage means in accordance with said number of connections.

5. A radio communication control apparatus for a mobile communication system comprising a plurality of base station units having a predetermined radio communication coverage area, amobile communication apparatus capable of communicating with said base station units, and a radio communication control apparatus that provides centralized control over said plurality of base station units, said mobile communication apparatus connecting to base station units corresponding to a plurality of radio communication coverage areas when said mobile communication apparatus is within an area in which said plurality of radio communication coverage areas overlap with each other, said radio communication control apparatus being **characterized by** comprising:
connection count managing means for managing the number of connections that represents the number of base station units to which said mobile communication apparatus is connected; and
information rate changing means for changing, based on the number of connections managed by said connection count managing means, an information rate at which communication between said mobile communication apparatus and the base station unit corresponding to a radio communication coverage area in which said mobile communication apparatus is positioned is performed.

6. The radio communication control apparatus according to claim 5, **characterized in that** said connection count managing means manages at any time the number of connections which changes as said mobile station moves; and
said information rate changing means changes said information rate at any time based on the number of connections managed by said connection count managing means.

7. The radio communication control apparatus according to claim 5 or 6, **characterized in that** said information rate changing means changes said information rate to a base rate divided by said number of connections, said base rate being an information rate at which said mobile communication apparatus is being connected to one of the base station units.

8. The radio communication control apparatus according to any of claims 5 to 7, **characterized in that** said information rate changing means comprises storage means for storing a predetermined information rate corresponding to said number of connections and changes said information rate to the predetermined information rate store in said storage means in accordance with said number of connections.

9. A mobile communication apparatus for a for a mobile communication system comprising a plurality of base station units having a predetermined radio communication coverage area, a mobile communication apparatus capable of communicating with said base station units, and a radio communication control apparatus that provides centralized control over said plurality of base station units, said mobile communication apparatus connecting to base station units corresponding to a plurality of radio communication coverage areas when said mobile communication apparatus is within an area in which said plurality of radio communication coverage areas overlap with each other, **characterized in that** an information rate at which said mobile communication apparatus communicates with a base station to which said mobile communication apparatus is connected can be changed according to an instruction from said radio communication control apparatus.

10. A mobile communication method for a mobile communication system comprising a plurality of base station units having a predetermined radio communication coverage area, a mobile communication apparatus capable of communicating with said base station units, and a radio communication control apparatus that provides centralized control over said plurality of base station units, said mobile communication apparatus connecting to base station units corresponding to a plurality of radio communication coverage areas when said mobile communication apparatus is within an area in which said plurality of radio communication coverage areas overlap with each other, said mobile communication method being **characterized by** comprising:
a connection count managing step of managing the number of connections that represents the number of base station units to which said mobile communication apparatus is connected; and
an information rate changing step of changing, based on said number of connections managed, an information rate at which communication between said mobile communication apparatus and the base station unit corresponding to a radio communication coverage area in which said mobile communication apparatus is positioned is performed.

11. The mobile communication method according to claim 10, **characterized in that**, at said connection count managing step, the number of connections which changes as said mobile station moves is managed at any time; and
at said information rate changing step, said information rate is changed at any time based on the number of connections managed by said connection count managing means.

12. The mobile communication method according to claim 10 or 11, **characterized in that**, at said information rate changing step, said information rate is changed to a base rate divided by said number of connections, said base rate being an information rate at which said mobile communication apparatus is being connected to one of the base station units.

13. The mobile communication method according to any of claims 10 to 12, **characterized in that**, at said information rate changing step, said information rate is changed to a stored predetermined information rate corresponding to said number of connections.
